Europäisches Patentamt

European Patent Office

Office européen des brevets

(11) Publication number: **0 186 966**
**B1**

(12) EUROPEAN PATENT SPECIFICATION

(45) Date of publication of patent specification: **05.04.89**

(21) Application number: **85308558.7**

(22) Date of filing: **26.11.85**

(51) Int. Cl.⁴: **A 01 N 47/30** // (A01N47/30, 43:78)

(54) Herbicides.

(30) Priority: **21.12.84 GB 8432391**

(43) Date of publication of application:
**09.07.86 Bulletin 86/28**

(45) Publication of the grant of the patent:
**05.04.89 Bulletin 89/14**

(84) Designated Contracting States:
**AT BE CH DE FR GB IT LI LU NL SE**

(56) References cited:
**FR-A-2 076 487**

**C.R. WORTHING: "The Pesticide Manual. A world compendium", 6th edition, 1979, page 28, British Crop Protection Council, Croydon, GB.**

(73) Proprietor: **SCHERING AGROCHEMICALS LIMITED**
**Hauxton Cambridge CB2 5HU (GB)**

(72) Inventor: **Rea, Bryan Leslie**
**61 Dovecote Lane**
**Beeston Nottingham (GB)**
Inventor: **Mayes, Anthony Joseph**
**61 High Street**
**Little Shelford Cambridge (GB)**

(74) Representative: **Wells, Norman David et al**
**Schering Agrochemicals Limited Industrial Property Department Chesterford Park Research Station**
**Saffron Walden Essex CB10 1XL (GB)**

Courier Press, Leamington Spa, England.

**Description**

This invention concerns herbicidal compositions and a herbicidal method.

In one aspect, the invention provides a herbicidal composition which comprises:

(a) benazolin, i.e. 4-chloro-2-oxobenzothiazolin-3-yl acetic acid, or a salt or ester thereof: and

(b) dimefuron, i.e. 2-t-butyl-4-(2-chloro-4-(3,3-dimethylureido)phenyl)-1,3,4-oxadiazolin-5-one;

in association with a suitable carrier and/or surface active agent.

In another aspect, the invention provides a method of combating weeds which comprises applying to a locus infested or liable to be infested therewith, an effective amount of the two components (a) and (b).

Each of the components (a) and (b) is known separately as a herbicide. When used in combination, however, the combination is synergistic.

Where the benazolin component is employed in the form of a salt, it is preferably an alkali-metal or alkaline earth metal salt, e.g. a sodium, potassium or calcium salt. When it is employed in the form of an ester, it is preferably an alkyl ester, e.g. where the alkyl group is of 1 to 4 carbon atoms, for example the methyl, ethyl, n-propyl, isopropyl or n-butyl ester. The ethyl ester is particularly preferred.

The weight ratio of (a):(b) is preferably from 1:1 to 1:4.

The present compounds are normally employed in the form of compositions containing a surface active agent and/or a carrier.

The compositions will normally be produced initially containing from 0.5 to 99%, preferably from 0.5 to 85%, and more usually from 10 to 50% by weight of the present compounds, which are diluted if necessary before application to the locus to be treated such that the concentration of active ingredient in the formulation applied is from 0.05 to 5% by weight.

The carrier may be water, in which case an organic solvent may also be present, though this is not usually employed. A flowable suspension concentrate may be formed by grinding the compound with water, a wetting agent and a suspending agent, e.g. xanthan gum.

The carrier may alternatively be a water immiscible organic solvent, e.g. a hydrocarbon which boils within the range 130—270°C, e.g. xylene, in which the compound is dissolved or suspended. An emulsifiable concentrate containing a water immiscible solvent may be formed with a surface active agent so that the concentrate acts as a self-emulsifiable oil on admixture with water.

The carrier may alternatively be a water-miscible organic solvent e.g. 2-methoxy ethanol, methanol, propylene glycol, diethylene glycol, diethylene glycol monoethyl ether, formamide or methylformamide.

The carrier may alternatively be a solid, which may be finely divided or granular. Examples of suitable solids are limestone, clays, sand, mica, chalk, attapulgite, diatomite, perlite, sepiolite, silicas, silicates, lignosulphonates and solid fertilizers. The carrier can be of natural or synthetic origin or can be modified natural material.

Wettable powders soluble or dispersible in water may be formed by admixing the compound in particulate form with a particulate carrier or spraying molten compound on to the particulate carrier, admixing a wetting agent and a dispersing agent and finely grinding the whole powder mixture.

An aerosol composition may be formed by admixing the compound with a propellant, e.g. a polyhalogenated alkane such as dichlorofluoromethane, and suitably also with a solvent.

The term 'surface active agent' is used in the broad sense to include materials variously called emulsifying agents, dispersing agents and wetting agents. Such agents are well known in the art.

The surface active agents used may comprise anionic surface active agents, for example mono- or diesters of phosphoric acid with a fatty alcohol ethoxylate, or salts of such esters, fatty alcohol sulphates such as sodium dodecyl sulphate, ethoxylated fatty alcohol sulphates, ethoxylated alkylphenol sulphates, lignin sulphates, petroleum sulphonates, alkylaryl sulphonates such as alkyl-benzene sulphonates or lower alkylnaphthalene sulphonates, salts of sulphonated naphthaleneformaldehyde condensates, salts of sulphonated phenolformaldehyde condensates, or more complex sulphonates such as the amide sulphonates, e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products or fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide, or ethoxylated tertiary fatty amines.

Preferred surface active agents include ethoxylated fatty alcohol sulphates, lignin sulphonates, alkylaryl sulphonates, salts of sulphonated naphthaleneformaldehyde condensates, salts of sulphonated phenolformaldehyde condensates, sodium oleoyl N-methyltauride, dialkyl sulphosuccinates, alkyl phenol ethoxylates, and fatty alkyl ethoxylates.

If the components (a) and (b) are applied sequentially, they may each be applied in a composition analogous to those described above.

If desired, the compositions may contain one or more further pesticides, e.g. herbicides, fungicides or insecticides in addition to components (a) and (b). Preferred further herbicides include clopyralid, propyzamide, carbetamide and ethyl 2-4-(6-chloro-2-quinoxalinyloxy)phenoxy]propionate, especially clopyralid.

The present method and compositions are highly effective for the selective control of weeds in crops.

Amongst the weeds which are combated are broad leaf weeds including speedwells (*Veronica* spp.), chickweed (*Stellaria media*), mayweeds (*Matricaria, Anthemis* and *Chamomilla* spp.), cleavers (*Galium aparine*), forget-me-not (*Myosotis arvensis*), parsley piert (*Aphanes arvensis*), poppy (*Papaver rhoeas*), corn spurrey (*Spergula arvensis*), fumitory (*Fumaria officinalis*), annual nettle (*Urtica urens*), shepherd's-purse (*Capsella bursaris*), deadnettles (*Lamium* spp.), charlock (*Sinapis arvensis*) and field pansy (*Viola arvensis*).

The crops in which the present method and compositions may be employed include brassicas, e.g. swedes, turnips and cabbages, and especially oilseed rape.

In the present method the amount of (a) applied is preferably from 0.05 to 1.0 kg/ha, desirably 0.2 to 0.8 kg/ha. The amount of (b) applied is preferably 0.1 to 2.0 kg/ha, desirably 0.2 to 1.5 kg/ha, especially 0.25 to 0.75 kg/ha. If clopyralid is also employed, it is preferably applied at a rate of from 0.01 to 0.1, especially 0.02 to 0.07 kg/ha.

The method and compositions of the present invention are preferably employed post-emergence of the crop species.

## Example

Seeds of the plant species listed below were sown in 750 mm diameter plastic pots containing sterilised sandy loam. The pots were then watered and placed in a glasshouse until the plants had 4 or 5 true leaves. The plants then received a foliar spray of the compounds set out below, formulated as a solution in 1:1 by volume of acetone and the wetting agent polyoxyethylene (20 mols) monolaurate solution (2 g per litre).

The concentration of the test compounds and volume of application were calculated to give the desired rate of application of the compounds in 200 litres per hectare. After a further 24 days, the plants were visually assessed for percentage herbicidal response relative to an untreated control.

In the table, the following designations are employed:

Compound A — Benazolin ethyl ester
Compound B — Dimefuron.

| Species | Rate (kg/ha) | | % Control |
|---|---|---|---|
| | Compound A | Compound B | |
| Field Pansy | 0.2 | — | 30 |
| | — | 0.5 | 0 |
| | 0.2 | 0.5 | 70 |
| Field Speedwell | 0.3 | — | 20 |
| | — | 0.75 | 55 |
| | 0.3 | 0.75 | 85 |

## Claims

1. A herbicidal composition which comprises from 0.5 to 99% by weight of
(a) benazolin, i.e. 4-chloro-2-oxobenzothiazolin-3-yl acetic acid, or a salt or ester thereof; and
(b) dimefuron, i.e. 2-t-butyl-4-(2-chloro-4-(3,3-dimethylureido)phenyl)-1,3,4-oxadiazolin-5-one;
in association with a suitable carrier and/or surface active agent.

2. A composition according to claim 1, in which the benazolin is present in the form of an alkali-metal salt, an alkaline earth metal salt, or an alkyl ester.

3. A composition according to claim 2, in which the benazolin is present in the form of the ethyl ester.

4. A composition according to any of claims 1 to 3 in which the weight ratio of (a) to (b) is from 1:1 to 1:4.

5. A composition according to any of claims 1 to 4 which also contains clopyralid, i.e. 3,6-dichloro-2-pyridine carboxylic acid.

6. A method of combating weeds which comprises applying to a locus infested or liable to be infested therewith, an effective amount of the two components:
(a) benazolin, i.e. 4-chloro-2-oxobenzothiazolin-3-yl acetic acid, or a salt or ester thereof; and

(b) dimefuron, i.e. 2-t-butyl-4-(2-chloro-4-(3,3-dimethylureido)phenyl)-1,3,4-oxadiazolin-5-one.

7. A method according to claim 6 for the selective control of weeds in brassicas.

8. A method according to claim 6 or claim 7 in which the benazolin is applied at a rate of from 0.05 to 1 kg/ha.

9. A method according to any of claims 6 to 8, in which the dimefuron is applied at a rate of from 0.1 to 2.0 kg/ha.

10. A method according to any of claims 6 to 9, in which the components (a) and (b) are applied in the form of a composition according to any of claims 1 to 5.

**Patentansprüche**

1. Herbizides Mittel enthaltend 0,5—99 Gew.-%

(a) Benazolin, d.h. 4-Chlor-2-oxobenzothiazolin-3-yl-essigsäure, ein Salz oder Ester davon, und

(b) Dimefuron, d.h. 2-tert.-Butyl-4-(2-chlor-4-(3,3-dimethylureido)phenyl)-1,3,4-oxadiazolin-5-on zusammen mit einem geeigneten Trägermaterial und/oder oberflächenaktiven Mittel.

2. Mittel nach Anspruch 1, in welchem das Benazolin als Alkalimetallsalz, als Erdalkalimetallsalz oder als Alkylester vorliegt.

3. Mittel nach Anspruch 2, in welchem das Benazolin als Ethylester vorliegt.

4. Mittel nach Anspruch 1—3 dadurch gekennzeichnet, daß das Gewichtsverhältnis von (a) zu (b) im Bereich von 1:1 bis 1:4 liegt.

5. Mittel nach Anspruch 1—4 dadurch gekennzeichnet, daß es darüber hinaus Clopyralid, d.h. 3,6-Dichlor-2-pyridincarbonsäure enthält.

6. Methode zur Bekämpfung von Unkräutern durch Applikation einer wirksamen Menge der beiden Komponenten

(a) Benazolin, d.h. 4-Chlor-2-oxobenzothiazolin-3-yl-essigsäure, ein Salz oder Ester davon, und

(b) Dimefuron, d.h. 2-tert.-Butyl-4-(2-chlor-4-(3,3-dimethylureido)phenyl)-1,3,4-oxadiazolin-5-on auf die befallene oder freizuhaltende Anbaufläche.

7. Methode nach Anspruch 6 zur selektiven Bekämpfung von Unkräutern in Brassica.

8. Methode nach Anspruch 6 oder 7 dadurch gekennzeichnet, daß das Benazolin in einer Menge von 0,05 bis 1 kg/ha angewendet wird.

9. Methode nach Anspruch 6—8 dadurch gekennzeichnet, daß das Dimefuron in einer Menge von 0,1 bis 2,0 kg/h angewendet wird.

10. Methode nach Anspruch 6—9 dadurch gekennzeichnet, daß die Komponenten (a) und (b) in Form der Mittel gemäß den Ansprüchen 1—5 angewendet werden.

**Revendications**

1. Composition herbicide qui comprend 0,5 à 99% en poids:

(a) de bénazoline, c'est-à-dire d'acide 4-chloro-2-oxobenzothiazolin-3-ylacétique, ou d'un sel ou ester de ce composé, et

(b) de diméfuron, c'est-à-dire de 2-t-butyl-4-(2-chloro-4-(3,3-diméthylurédio)phényl)-1,3,4-oxadiazolin-5-one,

en association avec un excipient et/ou un agent tensio-actif appropriés.

2. Composition suivant la revendication 1, dans laquelle la bénazoline est présente sous la forme d'un sel de métal alcalin, d'un sel de métal alcalino-terreux ou d'un ester alcoylique.

3. Composition suivant la revendication 2, dans laquelle la bénazoline est présente sous la forme de l'ester éthylique.

4. Composition suivant l'une quelconque des revendications 1 à 3, dans laquelle le rapport pondéral (a) à (b) est de 1:1 à 1:4.

5. Composition suivant l'une quelconque des revendications 1 à 4, qui contient aussi du clopyralide, c'est-à-dire de l'acide 3,6-dichloro-2-pyridine-carboxylique.

6. Procédé pour combattre les plantes adventices, qui comprend l'application, sur un lieu infesté par celles-ci ou susceptible de l'être, d'une quantité efficace de deux composants:

(a) de bénazoline, c'est-à-dire l'acide 4-chloro-2-oxobenzothiazolin-3-ylacétique, ou un sel ou ester de ce composé, et

(b) de diméfuron, c'est-à-dire de 2-t-butyl-4-(2-chloro-4-(3,3-diméthylurédio)phényl)-1,3,4-oxadiazolin-5-one.

7. Procédé suivant la revendication 6 pour la lutte sélective contre les plantes adventices dans les brassicacées.

8. Procédé suivant la revendication 6 ou 7, dans lequel la bénazoline est appliquée en une dose de 0,05 à 1 kg/ha.

9. Procédé suivant l'une quelconque des revendications 6 à 8, dans lequel le diméfuron est appliqué en une dose de 0,1 à 2,0 kg/ha.

10. Procédé suivant l'une quelconque des revendications 6 à 9, dans lequel les composants (a) et (b) sont appliqués sous la forme d'une composition suivant l'une quelconque des revendications 1 à 5.